# EUROPEAN PATENT APPLICATION

(11) **EP 4 786 281 A1**
(43) Date of publication of application: **05.08.2026**
(21) Application number: 24870696.2
(22) Date of filing: 24.09.2024
(51) Int. Cl.: B60R 13/02, B60Q 3/78, B60Q 3/20, B60Q 3/208

(54) **LIGHT-EMITTING ORNAMENT FOR VEHICLE, AND INTERIOR ORNAMENT FOR VEHICLE**

(30) Priority: 27.09.2023 CN 202311257749
(71) Applicant: Yanfeng International Automotive Technology Co., Ltd., Shanghai 201306 (CN)
(72) Inventor: CHEN, Diyu, Shanghai 201315 (CN); GU, Jing, Shanghai 201315 (CN); YANG, He, Shanghai 201315 (CN); QIU, Han, Shanghai 201315 (CN)
(74) Representative: Trinks, Ole
(86) International application number: PCT/CN2024/120656
(87) International publication number: WO 2025/067152

(57) **Abstract**

The present application discloses a kind of illuminated trim for a vehicle and an interior trim for a vehicle. The illuminated trim consists of a substrate and a light guide film attached to the substrate. The light guide film includes the light emitting surface and the bottom surface opposite the light output surface, and the bottom surface is close to the substrate; There are multiple optical microstructures constructed in at least part of the light guide film, and multiple optical microstructures form a preset pattern. After the light propagating within the light guide film passes through multiple optical microstructures, it changes the direction of propagation and ejects from the light emitter to render a preset pattern on the light emitting surface. Light that has not undergone optical microstructure does not emit from the light surface. In this way, the pattern on the glow surface is clear and sharp, so that the illuminated trim does not need a shield and homogenizer, which helps to reduce the thickness of the illuminated trim and make it easier to use the illuminated trim in small spaces.

## Description

### TECHNICAL FIELD

The present application relates to the technical field of vehicles, in particular to illuminated trim for use in vehicles. The present application also relates to interior trim for vehicles that include such illuminated trim.

### BACKGROUND TECHNOLOGY

Currently, some vehicles have illuminated trims on interior parts (e.g., door panels, dashboards, roofs, etc.) to display patterns on the interior parts as needed.

In the existing technology, illuminated trim usually includes multiple layered sheets such as substrates, light guide plates, homogenized films, and transparent protective layers. In addition, illuminated trims include a shield with a cut-out pattern, and the shield is set in the path of light (e.g., between a transparent protective layer and a homogenized film) so that the illuminated decoration can display a pattern corresponding to the cut-out pattern. The overall thickness of this illuminated trim is also larger, for example, the thickness can reach 9mm to 10mm, which is not conducive to the use of illuminated trim in narrow spaces.

### INVENTION CONTENT

In response to the above technical issues, the first aspect of the present application proposes an illuminated trim for use in vehicles. The illuminated trim comprises: a substrate, and at least one light guide film attached to the substrate; The light guide film includes the light emitting surface and the bottom surface opposite the light output surface, and the bottom surface is close to the substrate; At least part of the light guide film is constructed with multiple optical microstructures, and multiple optical microstructures form a preset pattern, so that the light propagating in the light guide film passes through multiple optical microstructures, changes the propagation direction and is emitted from the light surface to present the preset pattern on the light surface.

In one embodiment, the thickness of the light guide film is less than or equal to 1mm.

In one embodiment, the number of light guide films is plural, and multiple light guide film layering is set up; The preset patterns on each light guide film are the same or different from each other; The preset patterns on different light guide films deviate from each other or at least partially overlap each other.

In one embodiment, adjacent light guide films are tightly fitted together.

In one embodiment, a first reflective layer is provided between the substrate and the light guide film; The first reflective layer reflects at least the light leakage towards the substrate generated at the optical microstructure into the light guide film.

In one embodiment, the illuminated trim also includes a translucent surface decoration layer set above the light emitting surface of the light guide film.

In one embodiment, the surface decoration layer is closely attached to the light output surface, or there is a gap between the surface decoration layer and the light output surface.

In one embodiment, the surface decoration layer includes a light-transmitting area and a non-light-transmitting area deviating from the light-transmitting area, and the light-transmitting area corresponds to a preset pattern.

In one embodiment, the illuminated trim also includes a bottom surface decoration layer, which is between the light guide film and the substrate.

In one embodiment, the illuminated trim also includes a transparent protective layer that covers the light emitting surface of the light guide film.

In one embodiment, the illuminated trim also includes a light source; The light guide film consists of an incident surface connected between the light output surface and the bottom surface, and the light source is set to correspond to the incident surface.

In one embodiment, the light source includes a light-emitting device and a condenser; The condenser includes the incident end, the outgoing end away from the incident end, and the sidewall connected between the incident and outlet ends; The light-emitting device is set to correspond to the incident end and the size of the light-emitting device matches the size of the incident end so that the light emitted by the light-emitting device enters the condenser; The outlet corresponds to the incident surface of the light guide film, and the size of the outlet side matches the size of the incident surface to allow the light in the condenser to enter the light guide film.

In one embodiment, the light source also comprises: a light box with a housing cavity; The first end of the light box is constructed with an assembly opening connected to the housing cavity, and the second end is constructed with a light outlet hole connected to the housing cavity. The light-emitting device is in the housing cavity and close to the assembly opening; The condenser is set in the housing cavity, and the incident end of the condenser corresponds to the light-emitting device, and the outlet end corresponds to the light outlet hole.

In one embodiment, a second reflective layer is provided on the inner surface of the accommodating cavity; The second reflective layer reflects light from the side walls of the condenser into the condenser.

In one embodiment, the light source also includes: an end cap, the end cap is set at the second end of the light box, and a through hole corresponding to the light outlet hole is constructed on the end cap, and the size of the through hole matches the size of the incident surface of the light guide film.

In one embodiment, the section of the light guide film including the incident surface extends into the light box through the light outlet hole.

In one embodiment, the optical microstructure is made by any of the following types: micro-nano imprinting, screen printing, ultraviolet imprinting, etching, and engraving.

In one embodiment, the light guide film includes a film substrate and an optical adhesive layer attached to the film substrate; There are multiple pits on the optical adhesive layer that act as multiple optical microstructures, and the multiple pits form a preset pattern.

The second aspect of the present application proposes an illuminated trim for use in vehicles. Illuminated trim includes: multiple light guide films, multiple light guide film stacking settings; A preset pattern composed of multiple optical microstructures is set on each light guide film; and multiple light sources, which are set to correspond to multiple light guide films respectively, so that the light emitted by each light source is suitable for entering the corresponding light guide film; Among them, the illuminated trim is configured to make only one light source emit light, so that the illuminated trim displays the preset pattern on the corresponding light guide film; Or make multiple light sources emit light at the same time so that the illuminated trim displays a combination of preset patterns on the corresponding multiple light guide films.

In one embodiment, along the direction perpendicular to the plurality of light guide films, the preset patterns on multiple light guide films do not overlap each other or at least partially overlap each other; The illuminated ornament is configured to emit light from one or more light sources to control the brightness and/or color of the pattern displayed by the illuminated trim.

In one embodiment, the illuminated trim is suitable for being configured to cycle or extinguish multiple light sources to circulate light into the corresponding light guide film, so that the illuminated trim shows a dynamic luminous effect.

The third side of the present application proposes an interior trim for use in vehicles. This interior trim includes the illuminated trim for the vehicle as described above, on which the illuminated trim is set.

The beneficial effects of the present application are as follows: according to the illuminated trim used in the vehicle of the present application, a plurality of optical microstructures are constructed in at least part of the area of the light guide film, and a plurality of optical microstructures form a preset pattern. When using illuminated trim, the light propagated in the light guide film passes through multiple optical microstructures, changes the direction of propagation, and is emitted from the light emitting surface to present the preset pattern on the light emitting surface. Light that has not undergone optical microstructure does not emit from the light surface. In this way, the pattern on the luminous surface is clear and sharp, so that the illuminated trim does not need the shield and homogenized film in the existing technology, which helps to reduce the thickness of the illuminated trim and make it easier to use the illuminated trim in small spaces.

### FIGURE DESCRIPTIONS

The drawings illustrated herein are intended to provide further understanding of the present application and form part of the present application, and the schematic embodiments thereof and the description thereof are used to interpret the present application and do not constitute an undue qualification on the present application. In the attached figure:
- FIG. 1: schematically shows the internal structure of a vehicle pursuant to one embodiment of the present application.
- FIG. 2: shows the dashboard of the vehicle schematically.
- FIG. 3: schematically shows the illuminated trim for a vehicle pursuant to one embodiment of the present application.
- FIG. 4: is a zoomed-in view of Part I in FIG. 3.
- FIG. 5: schematically shows a preset pattern of multiple optical microstructures.
- FIG. 6: is a larger view of Part II in FIG. 5.
- FIG. 7: schematically shows the first reflective layer set between the light guide film and the substrate.
- FIG. 8: schematically shows the illuminated trim including the surface finishing layer.
- FIG. 9: schematically shows the illuminated trim including the underside trim.
- FIG. 10: schematically shows the illuminated trim of a light guide film with multiple stacking settings.
- FIG. 11a to FIG. 11g: schematically show the display effect of the illuminated trim shown in FIG. 10.
- FIG. 12a: schematically shows the light guide film fabricated by micro-nano imprinting.
- FIG. 12b: schematically shows the light guide film manufactured by screen printing.
- FIG. 12c: schematically shows the light guide film fabricated by UV imprinting.
- FIG. 13: schematically shows the first form of light source.
- FIG. 14: schematically shows the second form of light source.
- FIG. 15: shows the combined light source schematically.

### LIST OF MARKERS WITH DRAWINGS

- 1: Vehicle
- 10: Dashboard/instrument panel
- 11: Ceiling
- 12: Door panels
- 2: Illuminated trim for vehicles
- 20: Substrate
- 30: Light guide film
- 30a: first membrane layer
- 30b: second membrane layer
- 30c: third membrane layer
- 301: Light
- 302: First reflection layer
- 303: Light Leakage
- 304a: First Pattern
- 304b: Second Pattern
- 304c: Third Pattern
- 305: Binder
- 310: Light Output Surface
- 311: Bottom Surface
- 312: Optical microstructure
- 313: Preset patterns
- 314: Incident surface
- 321: Film substrate
- 322: Pit
- 323: ink
- 324: UV adhesive layer
- 40: Surface Decoration Layers
- 50: underside decoration layers
- 60: Lights
- 61: Combination Lights
- 601: Light Emitting Device
- 602: Condenser
- 603: Incident end
- 604: Exit end
- 605: Circuit Board
- 606: Sidewalls
- 610: Light Box
- 611: Housing Cavity
- 612: Assembly Opening 613 Light Hole
- 620: End Cap
- 621: Through Hole

### SPECIFIC EMBODIMENT

In order to make the purpose, technical solution and advantages of the present application clearer, the technical solution of the present application will be clearly and completely described in combination with the specific embodiments of the present application and the corresponding drawings. Obviously, the embodiments described are only part of the embodiments of the present application, not all of them. Based on the embodiments in the present application, all other embodiments obtained by ordinary technicians in the field without performing creative labor fall within the scope of protection of the present application.

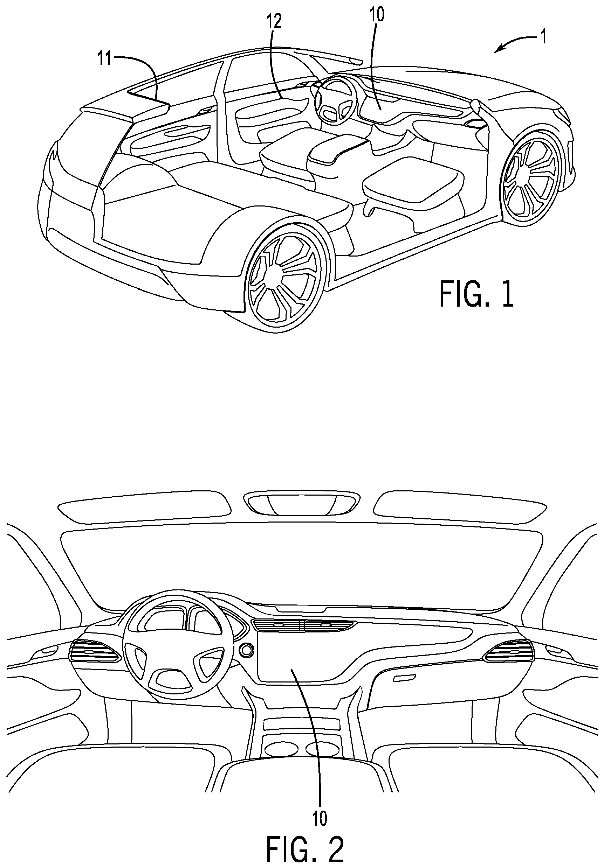

As shown in FIGS. 1 and 2, vehicle 1 includes several interior trims, such as the instrument panel 10, the ceiling 11 and the door panel 12. On any of these interior trims are equipped with an illuminated trim 2 for the vehicle (hereinafter referred to as illuminated trim 2 for simplicity) to make the interior trim display a specific light effect as needed.

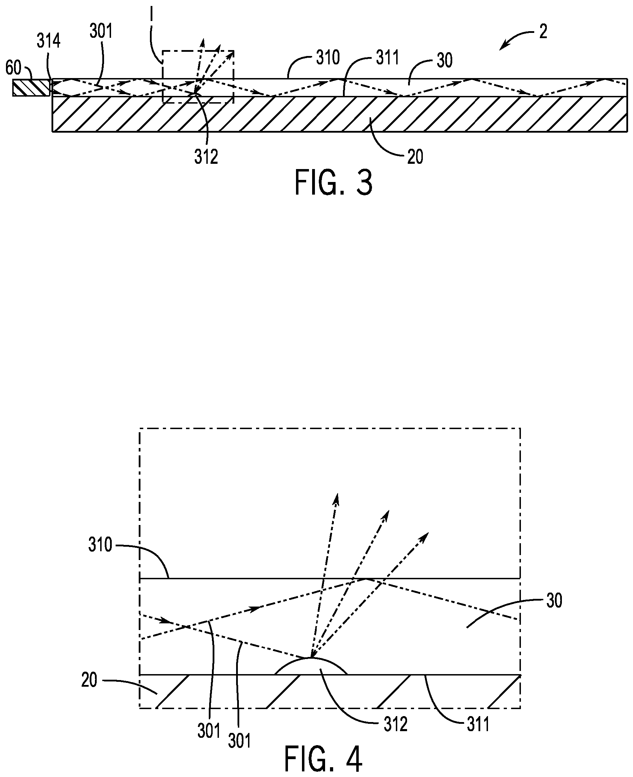

The following describes the illuminated trim 2 according to FIG. 3 to FIG. 15.

As shown in FIG. 3, the illuminated trim 2 comprises a substrate 20 and a light guide film 30 attached to the substrate 20.

The substrate 20 can be the backplate of the illuminated trim 2 to carry and protect the light guide film 30. In one embodiment, the substrate 20 may also be the interior trim itself.

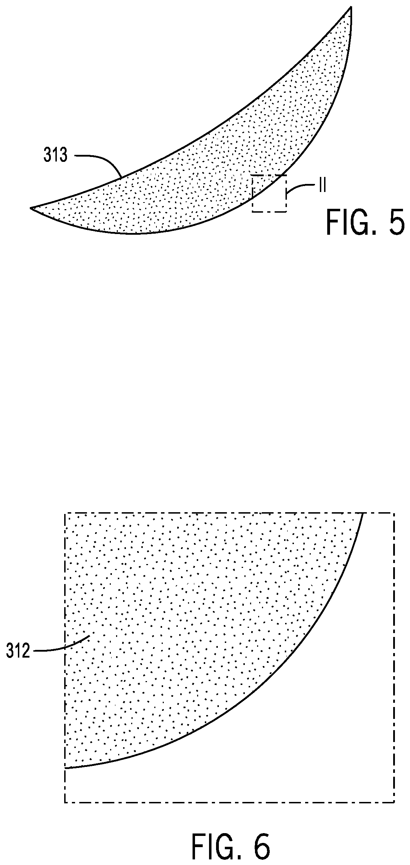

The light guide film 30 includes a light exit surface 310 and a plurality of optical microstructures 312 arranged in at least a part of the region of the light guide film 30 close to the light exit surface 310, as shown in FIGS. 5 and 6, and the optical microstructures 312 are arranged in a preset pattern 313.

When using the illuminated trim 2 of the present application, as shown in FIG. 4, the light 301 propagating in the light guide film 30 passes through these optical microstructures 312 and changes the direction of propagation and emits from the light emitting surface 310, so that the light guide film 30 presents a preset pattern 313. The rest of the light 301 still travels within the light guide film 30 and does not eject from the light emitting surface 310. On the whole, on the light output surface 310, except for the area corresponding to the preset pattern 313, there is almost no emitted light in the rest of the area, which makes the pattern clear and sharp. In this way, the illuminated trim 2 eliminates the need for a shield plate and homogenized film with a hollow pattern as in the prior art, which reduces the number of laminated sheets used by the illuminated trim 2, thereby helping to reduce the thickness of the illuminated trim 2 (for example, the illuminated trim 2 can be constructed to be between 1.8 mm and 3.6 mm thick) for easy use in the illuminated trim 2 in tight spaces. Moreover, the structure of the illuminated trim 2 of the present application is simpler, which helps to reduce the cost.

In addition, the thickness of the light guide film 30 of the light-emitting trim 2 of the present application is smaller than that of the light guide plate in the prior art. For example, the thickness of the light guide plate is usually greater than or equal to 2mm, and the thickness of the light guide film 30 of the present application is less than or equal to 1mm, for example, 0.6mm, which also helps to reduce the thickness of the illuminated trim 2.

It should be noted that the light guide film 30 is well known to technicians in this field. Optical microstructure 312 refers to a structure that affects the transmission performance of light at the scale of light wavelength or sub-optical wavelength. In one embodiment, the optical microstructure 312 can be formed in a variety of ways within the light guide film 30 and close to the bottom surface 311, for example, by nanoimprinting or micro-imprinting, or by screen printing, etching, engraving, etc. In other embodiments, the optical microstructure 312 can also be formed in other locations within the light guide film 30, such as near the light output surface 310. When using the light guide film 30, when the light does not encounter the optical microstructure 312, it will propagate in the light guide film 30 in a total reflection manner. After encountering the optical microstructure 312, the total reflection of light is destroyed, thus emitting from the light output surface 310. These are all familiar to technicians in this field and will not be repeated here.

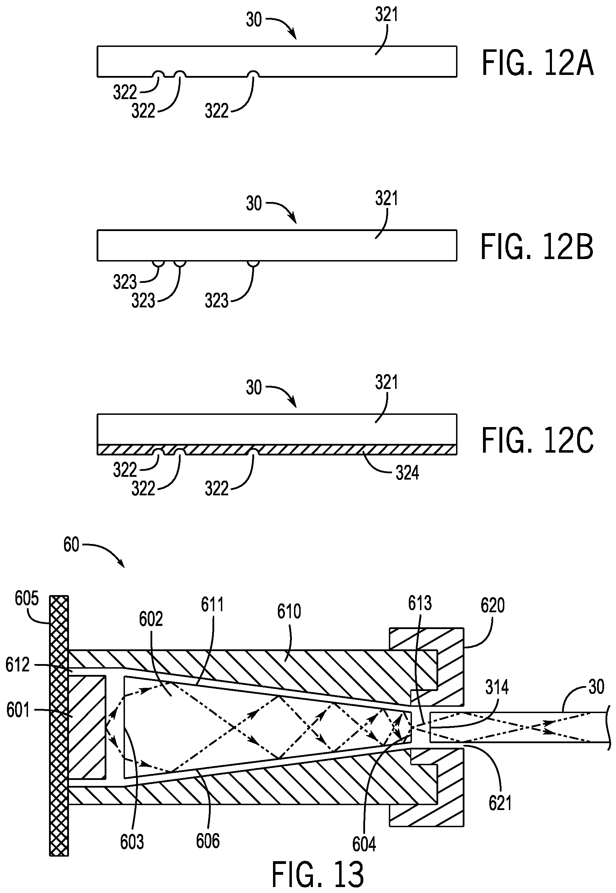

FIG. 12a schematically shows the light guide film fabricated by micro-nano imprinting. In the manufacturing process, the film substrate 321 is first supplied. Multiple pits 322 are then formed on the surface of the film substrate 321 by micro-nano imprinting. Each pit 322 is used as the optical microstructure described above, and a plurality of pit 322 constitutes a preset pattern. The method of making light guide films by etching or engraving is similar to this and will not be repeated here.

FIG. 12b schematically shows the light guide film manufactured by screen printing. In the manufacturing process, the film substrate 321 is first supplied. Then, the ink 323 is printed on the surface of the film substrate 321 by screen printing. Ink 323 is used as the optical microstructure described above and forms a preset pattern.

FIG. 12c schematically shows the light guide film fabricated by UV imprinting. In the manufacturing process, the film substrate 321 is first supplied. Then, an ultraviolet adhesive layer 324 is applied to at least one area of one surface of the film substrate 321, and the UV adhesive layer 324 is cured. Next, micro-nano imprinting is performed on the cured UV adhesive layer 324 to form multiple pits 322 on the UV adhesive layer 324. Each pit 322 is used as the optical microstructure described above, and a plurality of pit 322 constitutes a preset pattern. It should be noted that in the light guide film manufactured by ultraviolet imprinting, the light guide film comprises a film substrate 321 and an ultraviolet adhesive layer 324 attached to the film substrate 321, and a preset pattern is formed on the UV adhesive layer 324. It should be understood that other types of optical adhesive layers can also be applied to the film substrate 321 in appropriate cases, and on this optical adhesive layer pits are formed for optical microstructures.

In one embodiment, the light guide film 30 can be attached to the substrate 20 by means of insert injection molding, using optical glue bonding, hot melt embedding screws, laser welding, etc. For insert injection molding, the light guide film 30 can be used as the insert, and the substrate 20 is injected on the underside of the light guide film 311 to form a substrate 20.

In one embodiment, the light guide film 30 is tightly attached to the substrate 20 (e.g., by means of an optical adhesive to the substrate 20). In this way, the light guide film 30 forms a whole with the substrate 20 to avoid the relative movement of the light guide film 30 relative to the substrate 20, and then avoid mutual wear between the light guide film 30 and the substrate 20 or the abnormal noise of the illuminated trim 2.

In another embodiment, there may also be a gap between the light guide film 30 and the substrate 20, and the light guide film 30 is connected to the substrate 20 only at some pre-selected positions (e.g., it can be connected by laser welding), which helps to simplify the fabrication of the illuminated trim 2.

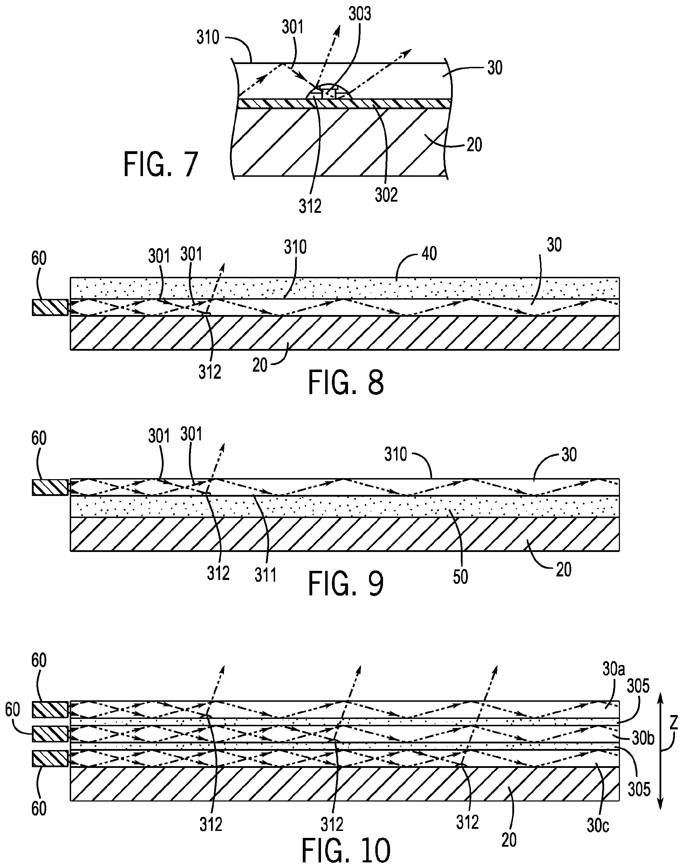

Optionally, as shown in FIG. 7, a first reflection layer 302 is set between the substrate 20 and the light guide film 3 0. The first reflection layer 302 reflects the light leakage 303 generated at the optical microstructure 312 towards the substrate 20 (or the first reflection layer 302) into the light guide film 30, and these light rays are finally emitted from the light emitting surface 310. In this way, the brightness of the pattern presented by the light guide film 30 will be significantly improved, further improving the clarity of the pattern.

In one embodiment, the first reflection layer 302 may be formed on the bottom surface 311 of the light guide film 30 or on the corresponding surface of the substrate 20. Technicians in this field can select the appropriate reflective material (e.g., reflective material can be reflective ink) based on the final brightness of the desired pattern, which is not limited here. In one embodiment, PVD (physical vapor deposition), spraying, or other appropriate processes may be used to form a first reflective layer on the bottom surface of the light guide film 311 or on the corresponding surface of the substrate 20, which is not restricted here.

It should be understood that in the case that the substrate 20 itself has good reflective properties (for example, when the substrate 20 is white), the surface of the substrate 20 in contact with the light guide film 30 can also be used as the first reflection layer 302. In this case, the Illuminated Trim 2 no longer needs to be equipped with a separate first reflection layer.

Optionally, as shown in FIG. 8, the illuminated trim 2 also includes a light-transmitting surface decoration layer 40. The surface decoration layer 40 is arranged above the light output surface 310 of the light guide film 30. According to this structure, the surface decoration layer 40 acts as a protection against the light guide film 30 from being damaged (e.g., scratched) and affecting the quality of the displayed pattern.

In one embodiment, the surface decoration layer 40 is translucent. This surface decoration layer 40 will act as an obscuration of the internal components of the illuminated trim 2, so as to prevent the user from observing the internal components of the illuminated trim 2 from the outside through the surface decoration layer 40, which helps to improve the aesthetics of the luminous decoration 2. It should be noted that the user can still identify the pattern presented by the light guide film 3 0 through this surface decoration layer 40.

In one embodiment, the light transmittance of the surface decoration layer 40 is between 5% and 95%, and the haze is between 0.5 and 90. By making the surface decoration layer 40 have appropriate light transmittance and haze, the surface decoration layer 40 can block the internal components of the luminous decoration 2, but the user can still identify the pattern presented by the light guide film 3 0 through the surface decoration layer 40, so that the surface decoration layer 40 forms a translucent. For example, the surface decoration layer 40 can have high light transmittance but large haze (e.g., light transmittance is 80%, haze is 80%; The surface decoration layer 40 can also have a lower light transmittance and lower light transmittance, but the haze is small (e.g., the light transmittance is 20%, the haze is 1%), and these surface decoration layers 40 can achieve the above effect. It should be noted that, if desired, a light-transmitting zone corresponding to the preset pattern can also be formed on the surface decoration layer 40, while the rest of the area is blackened out so that the user can observe a clear pattern.

In one embodiment, the surface decoration layer 40 is closely attached to the light output surface 310. In this way, the pattern on the glossy surface 310 seen by the user through the surface decoration layer 40 is clearer and the boundaries are sharp. This is preferred for the central control lights and instrument lights of vehicle 1.

In another embodiment, there is a gap between the surface decoration layer 40 and the light output surface 310. In this way, the pattern on the glossy surface 310 that the user sees through the surface decoration layer 40 becomes larger and the borders are softer. This is preferred for ambient lighting in vehicle 1. In one embodiment, the gap may be greater than 0mm and less than or equal to 3mm. Of course, the gap can also be set to other values according to the actual situation, and it is not limited here. In addition, in the case of a gap between the surface decoration layer 40 and the light output surface 310, the surface decoration layer 40 can be connected to the light guide film 30 only at some pre-selected points (e.g., by laser welding).

In one embodiment, the surface decoration layer 40 may also be made using a light-transmitting material with a specific tactile feel to give the illuminated trim 2 a specific tactile feel. For example, the surface decoration layer 40 can be made of translucent leather, which gives the illuminated trim 2 a leather-like feel. In another embodiment, the surface decoration layer 40 can also be made using a light-transmitting material with a pattern to make the illuminated trim 2 meet specific pattern requirements. For example, the surface decoration layer 40 can be made using light-transmitting wood or a light-transmitting diaphragm with a preset pattern, etc. Of course, the surface decoration layer 40 can also be made of any other appropriate light-transmitting material as needed, and there are no restrictions here.

In one embodiment, a foam with high light transmission can also be set between the surface decoration layer 40 and the light output surface 310. This gives the illuminated trim 2 a soft touch. It should be noted that foam may cause the observed pattern to be unclear. In this case, it is also possible to form a light transmission zone corresponding to the preset pattern on the surface decoration layer 40, while the rest of the area is blacked out so that the user can observe a clear pattern.

Optionally, as shown in FIG. 9, the illuminated trim 2 also includes the bottom surface decoration layer 50. The bottom surface decoration layer 50 is between the light guide film 30 and the substrate 20. According to this structure, the underside finish layer 50 can be made using materials with patterns and/or colors (e.g., diaphragms with patterns and/or colors). Since the light guide film 30 is transparent, the user can directly observe the pattern and/or color on the underside finish layer 50 from the outside of the illuminated trim 2, and the user may not even be aware of the presence of a light guide film 30, thus achieving the effect of hiding the light guide film 30.

Optionally, in the technical scheme shown in FIG. 9, the illuminated trim 2 also includes a transparent protective layer (not shown in the figure). This protective layer is covered on the light emitting surface 310 of the light guide film 3 0. The protective layer is used to avoid damage to the light guide film 30. For example, in the case of light guide film 30 made of PC (polycarbonate), its hardness is HB level. When the light emitting surface 310 of the light guide film 3 0 is used as the surface of the illuminated trim 2, this hardness level may not meet the requirements. In this case, a protective layer is applied to the glossy surface 310. In one embodiment, the protective layer may be a transparent hardened coating, or a transparent PC sheet, etc.

It should be noted that a protective layer can also be applied to the light output surface 310 if the hardness level of the light guide film 30 meets the requirements. In this way, the pattern formed on the light output surface 310 can be avoided from color casting, light loss, etc., which helps to further improve the brightness and clarity of the pattern.

FIG. 10 schematically shows another structure of illuminated trim 2, where the illuminated trim 2 has multiple layers of light guide film (e.g., the first layer 30a, the second layer 30b, and the third layer 30c). The first layer 30a, the second layer 30b and the third layer 30c are stacked.

In one embodiment, the preset patterns on the first layer 30a, the second layer 30b and the third layer 30c may be different from each other. In this way, according to different needs, light can be selected to shine into one or more of these film layers, so that the illuminated trim 2 can show different patterns, which is convenient for the user to use. In addition, by circulating light into each layer, the illuminated trim 2 can display a dynamic luminous effect to meet the needs of the user. It should be understood that according to the actual situation, the illuminated trim 2 can also be constructed with only two layers of light guide film or more than three layers of light guide film, which will not be repeated here. Optionally, as shown in FIG. 10, the first layer 30a, the second layer 30b, and the third layer 30c are set in the direction perpendicular to these layers (direction Z as shown in FIG. 10), and the preset pattern formed by the optical microstructure 312 on each layer deviates from the preset pattern formed by the optical microstructure 312 on the remaining layer (i.e., does not overlap each other). According to this structure, when light is injected into any two or all of the first layer 30a, the second layer 30b, and the third layer 30c, the patterns on the luminous surface of each layer do not overlap and can be combined into different patterns, which facilitates the use of luminous decorations 2.

In another embodiment, the preset pattern on the first layer 30a, the second layer 30b and the third layer 30c is the same. In this case, the first layer 30a, the second layer 30b, and the third layer 30c can be set to overlap each other along the direction perpendicular to these layers (direction Z as shown in FIG. 10), and the preset patterns formed by the optical microstructures 312 on these layers overlap each other. In this way, depending on the need, light can be selected to shine into one or more of these layers, thus controlling the brightness of the final pattern of the illuminated trim2.

In another embodiment, the light entering into different layers is of different colors. This allows you to control the color of the final pattern of the illuminated trim2 by selecting the light that shines into one or more of these layers.

In addition, regardless of whether the preset patterns on the first layer 30a, the second layer 30b, and the third layer 30c are the same or different, the first layer 30a, the second layer 30b, and the third layer 30c can be set to follow the direction perpendicular to these layers (direction Z as shown in FIG. 10). ), the preset pattern formed by the optical microstructure 312 on each film layer deviates from the preset pattern formed by the optical microstructure 312 on the remaining film layer. In this way, when light is injected into any two or all of the first layer 30a, the second layer 30b, and the third layer 30c, the light emitted from the light output surface of each layer does not overlap, and it can be combined into different patterns. In other embodiments, the first layer 30a, the second layer 30b, and the third layer 30c may also be set to follow the direction perpendicular to these layers (direction Z shown in FIG. 10), and the preset pattern formed by the optical microstructure 312 on each layer overlaps at least partially with the preset pattern formed by the optical microstructure 312 on the remaining layers. In this way, when light is injected into any two or all of the first layer 30a, the second layer 30b, and the third layer 30c, the patterns on the luminous surface of these layers are superimposed on each other, thus combining into a wider variety of different patterns, which further facilitates the use of luminous decorations2.

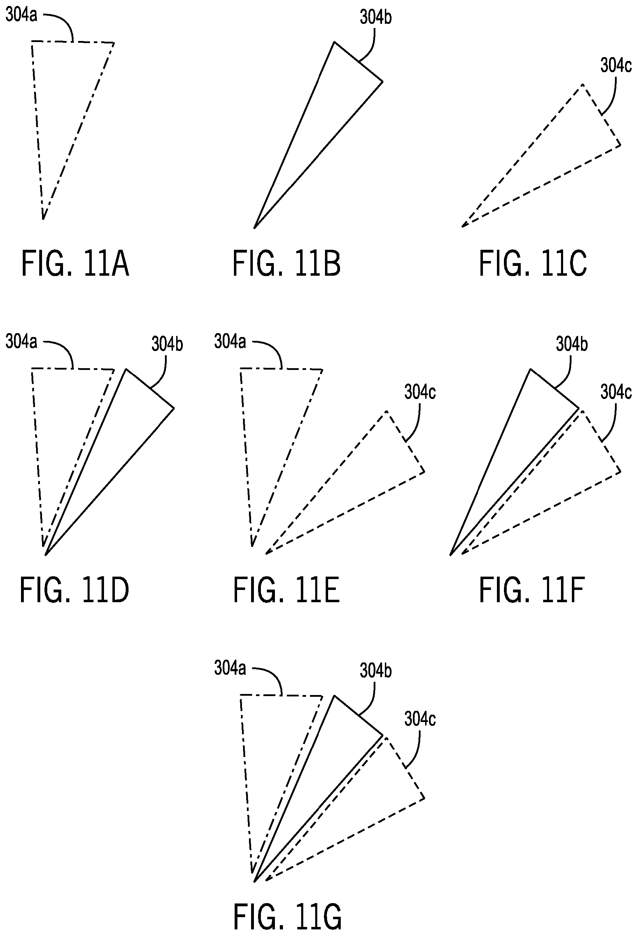

FIG. 11a to FIG. 11g show the display effect of the illuminated trim 2 shown in FIG. 10. When only light is injected into the first layer 30 a, the light is directed by the optical microstructure 312 of the first layer 30 A and emitted from the light emitting surface, causing the illuminated trim 2 to show the first pattern 304a (as shown in FIG. 11a). When the light is injected into the second layer 30b only, the light is directed by the optical microstructure 312 of the second layer 30b and is emitted from the light emitting surface 30a (and deviates from the optical microstructure 312 of the first layer 30a), causing the luminous decoration 2 to show the second pattern 304b (as shown in FIG. 11b). Similarly, when light is only injected into the third layer 30C, the illuminated trim 2 shows the third pattern 304c (as shown in FIG. 11c). When light is injected into the first layer 30a and the second layer 30b at the same time, the illuminated trim 2 shows the first pattern 304a and the second pattern 304b at the same time (as shown in FIG. 11d). When light is injected into the first layer 30A and the third layer 30c at the same time, the illuminated trim 2 shows the first pattern 304a and the third pattern 304c at the same time (as shown in FIG. 11e). When light is emitted into the second layer 30b and the third layer 30c at the same time, the illuminated trim 2 shows the second pattern 304b and the third pattern 304c at the same time (as shown in FIG. 11f). When light is injected into the first layer 30a, the second layer 30b and the third layer 30c at the same time, the illuminated trim 2 shows the first pattern 304a, the second pattern 304b and the third pattern 304c at the same time (as shown in FIG. 11g). When the light is circulated into the first layer 30a, the second layer 30b, and the third layer 30c, the illuminated trim 2 will display the first pattern 304a, the second pattern 304b, and the third pattern 304c in a cycle, and the illuminated ornament 2 shows a dynamic luminous effect as a whole. Of course, according to the actual situation, you can also choose to shine light into any or more of the first layer 30a, the second layer 30b, and the third layer 30c to make the illuminated decoration 2 display the required pattern, which will not be repeated here.

In one embodiment, also as shown in FIG. 10, between the first layer 30a and the second layer 30b, and between the second layer 30b and the third layer 30c, a transparent binder 305 is filled. In this way, the first layer 30a, the second layer 30b and the third layer 30c are bonded into a whole by binder 305 so that these layers do not move relatively. This avoids accidental misalignment of these layers with each other, which in turn prevents the pattern displayed by the illuminated trim 2 from being distorted or displaying the wrong pattern. In addition, these layers are bonded into a single whole, which also avoids abnormal noises caused by these layers wearing each other or illuminated trims2. It should be noted that binder 305 does not affect the propagation of light within the film layer and allows light to pass through the optical microstructure 312 and then change the direction of propagation to pass through. In one embodiment, the binder 305 can be any of the optical adhesives (i.e., OCA adhesives), hot melt adhesives, and water-based adhesives, which are well known to technicians in the field and will not be repeated here. Of course, technicians in this field can also fit these layers together in other ways, such as by laser welding, which is not limited here.

In another embodiment, there may also be gaps between adjacent film layers and they are connected to each other only at some pre-selected locations (e.g., they can be connected by laser welding). This helps simplify the manufacturing of illuminated trims2.

Optionally, the illuminated trim 2 also includes a light source 60 (as shown in FIG. 13). The light guide film 30 also includes an incident surface 314 connected between the light output surface 310 and the bottom surface 311. The light source 60 is set to correspond to the incident surface 314. In this way, the light emitted by the light source 60 will shine into the light guide film 30, so that the illuminated trim 2 displays a pattern corresponding to the preset pattern 313 on the light guide film 30.

In one embodiment, in the presence of multiple light guide films 30, an independent light source 60 is provided for each light guide film 30. For example, as shown in FIG. 10, each of the first layer 30a, the second layer 30b, and the third layer 30c is equipped with an independent light source 60. This allows each light source to be controlled 60 glow or extinguished as needed so that the illuminated trim 2 shows the desired pattern.

In one embodiment, the light source 60 can emit colored light, which helps to make the illuminated trim 2 further present a special pattern effect.

FIG. 13 schematically shows the first form of light source 60. The light source 60 comprises a light-emitting device 601 and a condenser 602.

In one embodiment, the light-emitting device 601 is an LED lamp bead. LED lamp beads are small in size for easy application to smaller illuminated trims2. In addition, the LED lamp beads emit and extinguish for easy control to easily achieve the desired pattern of the illuminated ornaments2. In other implementations, the light-emitting device 601 can also be used as a laser source.

The condenser 602 comprises an incident end 603, an outlet end 604 away from the incident end 603, and a side wall 606 connected between the incident end 603 and the outlet end 604. The light emitting device 601 is set to correspond to the incident end 603 of the condenser 602, and the size of the light emitting device 601 matches the size of the incident surface 603, so as to facilitate the light emitted by the light emitting device 601 to enter the condenser 602. The outlet end 604 of the condenser 602 corresponds to the incident surface 314 of the light guide film 30, and the size of the outlet end 604 matches the size of the incident surface 314, so as to facilitate the light in the condenser 602 to enter the light guide film 30. In this way, the condenser 602 allows the light emitted by the light-emitting device 601 to penetrate the light guide film 30 as much as possible. It is particularly advantageous to set up a condenser 602 when the size of the light-emitting device 601 does not match the size of the incident surface 314 of the light guide film 30. For example, if the size of the light-emitting device 601 is larger than the size of the incident surface 314 of the light guide film 30, then the light-emitting device 602 is generally cone-shaped, and the large end is oriented towards the light-emitting device 601 and the small end is facing the light guide film 30, so as to direct the light emitted by the light-emitting device 601 into the light-guiding membrane 30 as much as possible. It should be understood that the condenser 602 may not be set up when the size of the light-emitting device 601 matches the size of the incident surface 314 of the light guide film 30.

Optionally, as shown in FIG. 13, the light source 60 also includes a light box 610. The light box 610 has a housing cavity 611. The first end of the light box 610 is constructed with an assembly opening 612 connected to the housing cavity 611, and the second end of the light box 610 is constructed with a light outlet hole 6 13 connected to the housing cavity 611. The light emitting device 601 is located in the housing cavity 611 and is close to the assembly opening 612. The condenser 602 is arranged in the housing cavity 611, and the incident end 603 of the condenser 602 corresponds to the light-emitting device 612, and the outgoing end 604 corresponds to the light outlet hole 613.

In one embodiment, the illuminated trim 2 may also include a circuit board 605 supplying power to the light emitting device 601. Thus, when assembling the illuminated trim 2, the assembly opening 612 is bonded with the circuit board 605 to accommodate the light emitting device 601 into the housing cavity 611.

In one embodiment, a second reflective layer is provided on the inner surface of the accommodating cavity 611 (not shown in the figure). The second reflection layer reflects the light emitted from the side wall 606 of the condenser 602 into the condenser 602, which helps to increase the amount of light entering the light guide film 30 and thereby helps to increase the brightness of the pattern presented by the illuminated trim 2.

Optionally, as shown in FIG. 13, the light source 60 also includes an end cap 620. The end cap 620 is set at the second end of the light box 610. On the end cap 620 there is athrough hole 621 corresponding to the light outlet hole 6 13. The size of the through hole 621 is matched with the size of the incident surface 314 of the light guide film 30, so as to facilitate the alignment of the incident surface 314 of the light guide film 30 with the through hole 621, which in turn helps to make the light emitted from the outgoing end 6 04 of the condenser 604 into the light guide film 30.

On the whole, the light box 610 and the end cap 620 play a protective role in the condenser 602 and the light emitting device 601, and also facilitate the assembly of the condenser 602 and the light emitting device 601.

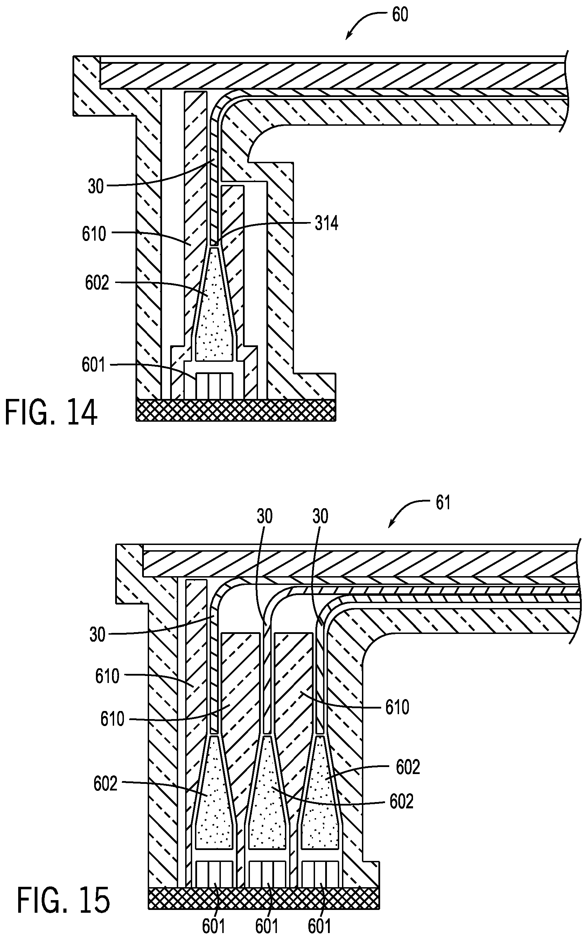

FIG. 14 schematically shows the second form of light source 60. As shown in FIG. 14, the first form of light source is similar, and the second form of light source 60 also includes a light emitting device 601, a condenser 602, and a light box 610. The difference is mainly that the length of the light box 610 of the second form of light source 60 is greater than that of the condenser 602. The section of the light guide film 30 including the incident surface 314 extends into the lamp box 610. In this way, the second form of light source 60 eliminates the need for an end cap.

FIG. 15 schematically shows the combined light source 61. The combined light source 61 is matched with a light guide film 30 with multiple layers. Specifically, the combined light source 61 includes multiple second forms of light source 60. These second forms of light sources60 are arranged side by side and are aligned separately with the corresponding light guide film 30 to provide light to each light guide film 30 individually.

In a combined light source 61, the adjacent second form of light source 60 is spaced by a light box 610 to avoid cross-beaming.

It should be understood that a combination of light sources 61 can also be used with multiple first forms of light sources 60, which will not be repeated here.

It should be noted that the present invention (e.g., invention concept, etc.) has been described and/or illustrated in the specification of this patent document according to exemplary embodiments; The embodiments of the present invention are presented only by example and are not intended to be used as a limitation on the scope of the present invention. The structure and/or arrangement of elements of the invention concept embodied in the present invention as described in the specification and/or illustrated in the diagram are illustrative only. Although exemplary embodiments of the present invention have been described in detail in the present patent document, it is easy for an ordinary person skilled in the field to understand that the equivalent, modification, variation, etc. of the subject matter of the exemplary embodiment and the alternative embodiment are possible and are considered to be within the scope of the present invention; All these subject matter (e.g., modifications, variations, embodiments, combinations, equivalents, etc.) are intended to be included in the scope of the present invention. It should also be noted that in the configuration and/or arrangement of exemplary embodiments (e.g. in concept, design, structure, device, form, assembly, construction, means, function, system, process/method, step, sequence of process/method steps, operation, operating conditions, performance, materials, composition, composition, etc.) various/other modifications, changes, substitutions, equivalences, alterations, omissions, etc. may be made. ) without deviating from the scope of the present invention; All these subjects (e.g., modifications, variations, embodiments, combinations, equivalents, etc.) are intended to be included in the scope of the present invention. The scope of the invention is not intended to be limited to the subject matter described in the specification and/or diagram of the patent document (such as details, structure, function, material, behavior, steps, sequences, systems, results, etc.). Considering that the claims of this patent document would be properly interpreted to cover the full scope of the subject matter of the invention (e.g., including any and all such modifications, variations, embodiments, combinations, equivalents, etc.); The terms used in this patent document should be understood to provide a description of the subject matter of an exemplary embodiment and not as a limitation on the scope of the invention.

It is also important to note that, depending on the exemplary embodiment, the invention may include conventional technology (such as technology implemented and/or integrated in an exemplary embodiment, modification, variation, combination, equivalent) or may include any other applicable technology (now and/or in the future) with the ability to perform the functions described in the specification and the procedure/operation and/or illustrated in the figure. All of these technologies (e.g., technologies implemented by means of embodiments, modifications, variations, combinations, equivalents, etc.) are considered to be within the scope of the present invention in this patent document.

## Claims

1. A kind of illuminated trim for vehicles, wherein the illuminated trim comprises:
- Substrate, and
- at least one light guide film, the light guide film is attached to the substrate; the light guide film comprises a light-emitting surface and a bottom surface opposite the light-emitting surface, and the bottom surface is close to the substrate; A plurality of optical microstructures is constructed in at least part of the area of the light guide film, and the plurality of optical microstructures forms a preset pattern, so that the light propagating in the light guide film changes the propagation direction and is emitted from the light surface after passing through a plurality of optical microstructures, so that the light guide film presents the preset pattern.

2. The illuminated trim according to claim 1,
wherein the thickness of the light guide film is less than or equal to 1mm.

3. The illuminated trim according to claim 1,
wherein a plurality of light guide films are provided, and the plurality of light guide films are stacked; the preset patterns on each of the light guide films are the same or different from each other; and the preset patterns on different light guide films deviate from each other or at least partially overlap each other.

4. The light-emitting trim according to claim 3,
wherein the adjacent light guide film is closely attached together.

5. The illuminated trim according to claim 1,
wherein a first reflective layer is arranged between the substrate and the light guide film; The first reflective layer reflects at least the light leakage towards the substrate generated at the optical microstructure into the light guide film.

6. The illuminated trim according to claim 1,
wherein the illuminated trim also includes a translucent surface decoration layer, and the surface decoration layer is arranged above the light-emitting surface of the light guide film.

7. The illuminated trim according to claim 6,
wherein the surface decoration layer is closely attached to the luminous surface, or there is a gap between the surface decoration layer and the luminous surface.

8. The illuminated trim according to claim 6,
wherein the surface decoration layer comprises a light-transmitting area and a non-light-transmitting area deviating from the light-transmitting area, and the light-transmitting area corresponds to the preset pattern.

9. The illuminated trim according to claim 1,
wherein the illuminated trim also includes a bottom surface decoration layer, and the bottom surface decoration layer is between the light guide film and the substrate.

10. The illuminated trim according to claim 9,
wherein the illuminated trim also includes a transparent protective layer, and the protective layer covers the light-emitting surface of the light guide film.

11. The illuminated trim according to claim 1,
wherein the illuminated trim also includes a light source;
The light guide film comprises an incident surface connected between the light output surface and the bottom surface, and the light source is set to correspond to the incident surface.

12. the light-emitting trim according to claim 11,
wherein the light source comprises a light-emitting device and a condenser; the condenser comprises an incident end, an outgoing end far away from the incident end, and a side wall connected between the incident end and the outlet end;
the light-emitting device is set to correspond to the incident end, and the size of the light-emitting device matches the size of the incident end, so that the light emitted by the light-emitting device can be injected into the condenser; The outgoing end corresponds to the incident surface of the light guide film, and the size of the outlet end matches the size of the incident surface, so that the light in the condenser can enter the light guide film.

13. The illuminated trim according to claim 12, wherein the light source also comprises:
- a light box, the light box has a holding cavity; the first end of the light box is constructed with an assembly opening connected with the housing cavity, and the second end is constructed with a light outlet hole connected with the housing cavity; the light-emitting device is in the housing cavity and is close to the assembly opening; The condenser is arranged in the housing cavity, and the incident end of the condenser corresponds to the light-emitting device, and the outgoing end corresponds to the light-emitting hole.

14. The illuminated trim according to claim 13,
wherein a second reflective layer is provided on the inner surface of the accommodating cavity; The second reflection layer reflects the light emitted from the side wall of the condenser into the condenser.

15. The illuminated trim of claim 13,
wherein the light source also comprises: an end cap, the end cap is set at the second end of the light box, and a through hole corresponding to the light outlet hole is constructed on the end cap, and the size of the through hole matches the size of the incident surface of the light guide film.

16. The light-emitting trim according to claim 13, wherein the section of the light guide film including the incident surface extends into the lamp box through the light-outlet hole.

17. The illuminated trim according to claim 1, wherein the optical microstructure is made by any of the following types: micro-nano embossing, screen printing, ultraviolet imprinting, etching, and engraving.

18. The light-emitting trim according to claim 1, wherein the light guide film comprises a film substrate and an optical adhesive layer attached to the film substrate; and the optical adhesive layer is provided with a plurality of pits as a plurality of optical microstructures, and the plurality of pits form the preset pattern.

19. A kind of illuminated trim for vehicles, wherein the illuminated trim comprises:
- a plurality of light guide films, wherein the plurality of light guide films are stacked; and a preset pattern composed of a plurality of optical microstructures disposed on each of the light guide films; and
- a plurality of light sources, wherein the plurality of light sources are configured to correspond to the plurality of light guide films respectively, so that the light emitted by each light source is suitable for shining into the corresponding light guide film;
wherein the illuminated trim is configured to be suitable for emitting light from only one light source so that the illuminated trim displays a preset pattern on the corresponding light guide film; or to simultaneously cause the plurality of light sources to emit light, so that the illuminated trim displays a combination of preset patterns on the corresponding plurality of light guide films.

20. The light-emitting trim according to claim 19,
wherein the preset patterns on the plurality of light guide films do not overlap each other or at least partially overlap each other in the direction perpendicular to the plurality of light guide films;
The illuminated trim is configured to be suitable for causing one or more light sources to emit light to control the brightness and/or color of the pattern displayed by the illuminated trim.

21. The illuminated trim according to claim 19,
the illuminated trim is suitable for being configured to make a plurality of light sources cyclically emit light or extinguish, so as to circulate the light into the corresponding light guide film, so that the illuminated trim exhibits a dynamic luminous effect.

22. An interior trim for a vehicle, wherein the illuminated trim is set on the interior trim of the vehicle as described pursuant to any of claims 1 to 18, or for a vehicle pursuant to any of claims 19 to 21.
